# EUROPÄISCHE PATENTSCHRIFT

(11) **EP 0 870 561 B1**
(45) Veröffentlichungstag und Bekanntmachung des Hinweises auf die Patenterteilung: **17.01.2001**
(21) Anmeldenummer: 98106468.6
(22) Anmeldetag: 08.04.1998
(51) Int. Cl.: B23B 51/04, B23B 47/34

(54) **Bohrwerkzeug**
Drill bit
Outil de forage

(30) Priorität: 11.04.1997 DE 19715109
(43) Veröffentlichungstag der Anmeldung: 14.10.1998
(73) Patentinhaber: UPAT GMBH & CO, D-79312 Emmendingen (DE)
(72) Erfinder: Moser, Bernhard, 88361 Altshausen (DE); Haussmann, August, 88213 Ravensburg (DE)

(56) Entgegenhaltungen:
- US-A- 5 015 128

## Beschreibung

Die Erfindung betrifft ein Bohrwerkzeug nach dem Oberbegriff des Anspruchs 1. Ein derartiges Bohrwerkzeug ist z.B. der US-A-50 15 128 zu entnehmen.

### Stand der Technik:

Bohrwerkzeuge der gattungsgemäßen Art bestehen aus einer hohlzylindrischen Bohrkrone mit stirnseitig angebrachten Schneidelementen, bestehend z. B. aus einzelnen Hartmetall-Schneidelementen (DE-U-93 02 487) oder aus sägezahnartigen Schneidzähnen (DE-OS 24 07 469), die ebenfalls mit Hartmetall bestückt sein können.

Derartige Werkzeuge, auch "Bohrkronen" genannt, werden in Bohrmaschinen oder Bohrhämmern eingesetzt und dienen zur Bearbeitung von Gestein mit schlagender und/ oder drehender Beanspruchung (DE-OS 26 02 238). Mit einem entsprechend angepaßten Schneidbesatz können diese Werkzeuge auch zur Bearbeitung von Holz oder dergleichen verwendet werden.

Üblicherweise weisen derartige Werkzeuge mittig angeordnete Zentrierbohrer auf (DE-OS 16 52 518), die beim Anbohren ein wegrutschen der Bohrkrone vermeiden helfen.

Will man während des eigentlichen Bohrvorgangs auf den mittigen Zentrierbohrer verzichten, so können separate Zentrierhilfen verwendet werden, die lediglich beim Anbohren in die Bohrkrone eingesetzt und danach wieder entfernt werden (DE-U 89 02 472).

Die bekannten Bohrkronen dienen im Allgemeinen dazu, größere Löcher in das zu bearbeitende Material einzubringen. Handelt es sich hierbei um Gestein bzw. Beton, so wird der im Inneren der Bohrkrone sich bildende Kern im Allgemeinen durch Zertrümmerung herausgeschlagen. In die so mit Nenndurchmesser der Bohrkrone hergestellte Bohrung kann dann das vorgesehene Teil, z. B. eine Steckdosenhalterung oder dergleichen eingesetzt werden. Die Bohrkrone kann jedoch auch sowohl in Gestein als auch in Holz dazu dienen, Durchgangslöcher herzustellen. Bei einer Holzbearbeitung muß der verbleibende Kern aus der Bohrkrone nachträglich entfernt werden.

Ein völlig anderes Anwendungsgebiet betrifft die Verwendung von sogenannten Fräsbohrern oder Flachfräsbohrer wie sie beispielsweise nach DIN 3483 als sogenannte Forstnerbohrer und Kunstbohrer zur Bearbeitung von Holz bekannt geworden sind. Derartige Werkzeuge dienen mit ihren stirnseitigen Schneiden zum Bohren von maßgenauen und ausrißfreien Bohrlöchern beispielsweise in Massivholz oder furnierten Holzplatten bzw. in sonstigen Weich-, Hart- und Exotenhölzern die auch kunststoffverleimt oder kunststoffbeschichtet sein können. In die so hergestellten Bohrungen können beispielsweise Beschläge oder sonstige Befestigungsmittel eingebracht werden. Demzufolge dienen auch sogenannte Beschlagbohrer zur Herstellung exakter Bohrungen zum Einsetzen beispielsweise von Topfscharnieren in allen Arten von Hölzern.

### Aufgabe und Lösung der Erfindung:

Der Erfindung liegt die Aufgabe zugrunde, ein Bohrwerkzeug zu schaffen, welches einen erweiterten Einsatzbereich gegenüber herkömmlichen Werkzeugen der eingangs beschriebenen Art aufweist. Diese Aufgabe wird mit einem Bohrer mit den Merkmalen des Anspruchs 1 gelöst. Dabei dient das Werkzeug insbesondere auch zur Herstellung von speziellen Bohrungen, in die Verankerungsmittel, Befestigungselemente, Befestigungsanker oder Dübelelemente einsetzbar sind, die einer sehr hohen Belastung Stand halten sollen. Dies wird durch das erfindungsgemäße Bohrwerkzeug insbesondere dadurch erzielt, daß z. B. bei der Holzbearbeitung mittels der erfindungsgemäßen Bohrkrone ein tiefer ringförmiger Befestigungs- und Führungsspalt hergestellt wird, mit z. B. verbleibenden bzw. stehendem inneren Kern, was zur Aufnahme einer darin einzufügenden Befestigungshülse dient. Die Befestigungshülse bzw. der Befestigungsanker selbst ist z. B. topfförmig ähnlich der Grundstruktur der Bohrkrone aufgebaut, wobei der Boden dieser Hülse als Befestigungsflansch oder Befestigungsanker für Befestigungsmittel aller Art dient. Dieser Befestigungsflansch am topfförmigen Boden des Befestigungsmittels soll vorzugsweise in das zu bearbeitende Material eingelassen werden, wozu mittels eines separaten Forstnerbohrers oder dergleichen eine zusätzliche Bohrung hierfür hergestellt werden könnte, um den Kernbereich der mit der Bohrkrone hergestellten ringförmigen Bohrung nachträglich wenigstens teilweise zu entfernen. Dieser Vorgang wird jedoch mit dem erfindungsgemäßen Bohrwerkzeug in einem Arbeitsgang dadurch hergestellt, daß sich innerhalb der Bohrkrone ein zusätzliches Fräsbohrwerkzeug befindet, welches während des Bearbeitungsvorgangs mit der Bohrkrone gleichzeitig mit dem zusätzlichen Fräsbohrwerkzeug den sich innerhalb der Bohrkrone befindenden Kernbereich materialabtragend bearbeitet. Hierdurch entsteht eine Art Sackloch mit darum liegenden Ringspalt, in welchem die topfförmige Befestigungshülse mit bodenseitigem Befestigungsanker eingesetzt werden kann. Mittels eines langen zylindrischen Wandungsabschnitts der Befestigungshülse und eines eingebrachten bodenseitigen Ankers wird ein dübelartiges Befestigungsmittel geschaffen, welches ein hohes Maß an Kräften aufnehmen kann. Das Befestigungsmittel wird in die mit dem erfindungsgemäßen Bohrwerkzeug hergestellte Bohrung eingeklebt, eingepaßt und sonstwie befestigt.

Weitere Einzelheiten der Erfindung sind in den Zeichnungen dargestellt und in der nachfolgenden Beschreibung von Ausführungsbeispielen näher erläutert.

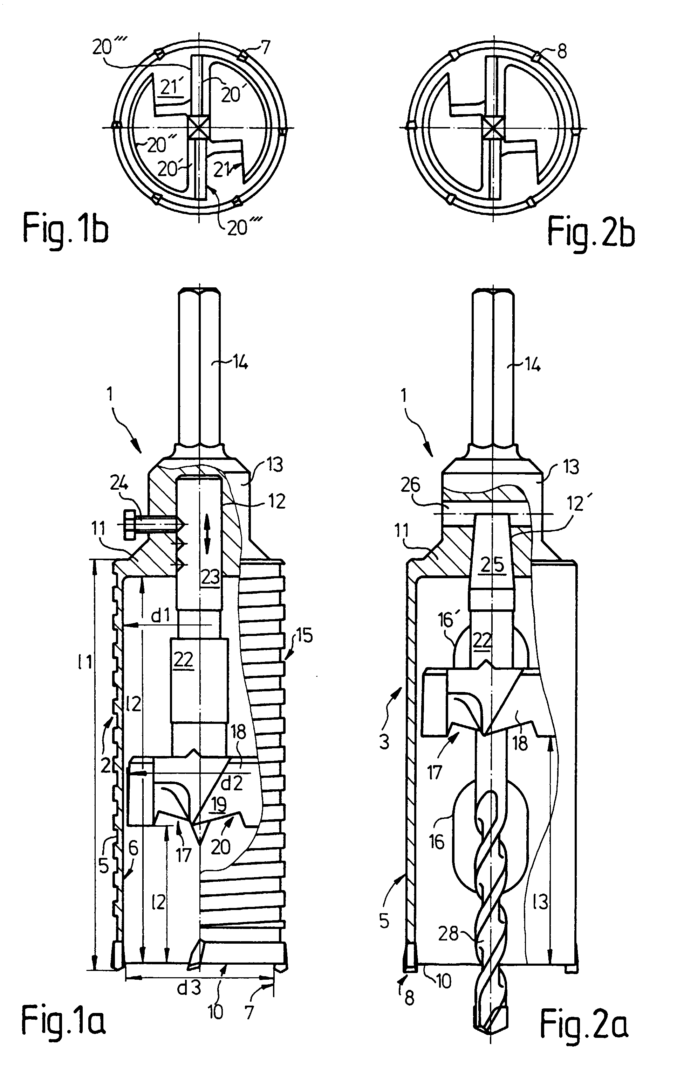

Es zeigen
- Fig. 1 a: ein erstes Ausführungsbeispiel der Erfindung in geschnittener Seitendarstellung,
- Fig. 1 b: die Stirnansicht auf ein derartiges Werkzeug,
- Fig. 2 a: ein zweites Ausführungsbeispiel der Erfindung in teilgeschnittener Darstellung,
- Fig. 2 b: eine stirnseitige Ansicht nach Fig. 2 a,

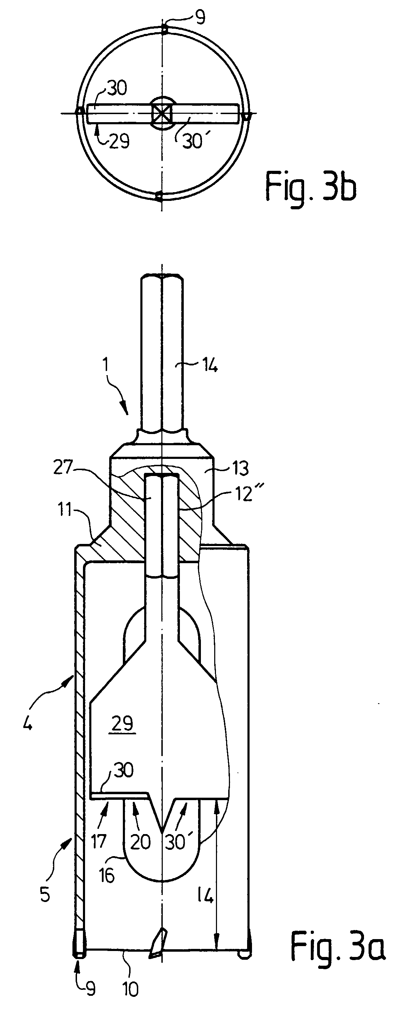

- Fig. 3 a: ein weiteres Ausführungsbeispiel der Erfindung in teilgeschnittener Darstellung und
- Fig. 3 b: ein stirnseitige Ansicht der Ausführungsform nach Fig. 3 a.

### Beschreibung der Ausführungsbeispiele:

Das in den Fig. 1 a bis 3 a dargestellte Bohrwerkzeug 1 besteht aus jeweils einer hohlzylindrischen Bohrkrone 2 bis 4, die eine Zylinderaußenmantelfläche 5 mit der Länge l₁ und eine Zylinderinnenmantelfläche 6 mit der Länge l₂ und Innendurchmesser d₁ aufweisen. Diese topfförmigen Bohrkronen 2 bis 4 weisen an ihrer Stirnseite 10 Hartmetall-Schneidelemente 7 bis 9 auf, die z. B. als Spitzzähne 7, Flachzähne 8 oder Trapezzähne 9 ausgebildet sein können.

Wie aus den Fig. 1 b bis 3 b ersichtlich, sind die jeweiligen Hartmetall-Schneidelemente in unterschiedlicher Anzahl symmetrisch oder auch asymmetrisch an der Stirnseite 10 jeder Bohrkrone 2 bis 4 angeordnet.

Der der Stirnseite 10 gegenüber liegende Bereich der Bohrkrone ist als Bohrkronenboden 11 ausgebildet. Aufgrund der im Bohrkronenboden befindlichen Befestigungsbohrung 12 ist der Bohrkronenboden als Massivteil 13 ausgebildet und geht abgesetzt in den Aufnahmeschaft 14 über, der in den Ausführungsbeispielen nach Fig. 1 a bis 3 a als Vierkant zur Aufnahme in einer entsprechenden Bearbeitungsmaschinen mit zugehörigem Bohrfutter ausgebildet ist. Der Aufnahmeschaft 14 kann jedoch auch jede andere, insbesondere zylindrische Geometrie aufweisen, um in ein entsprechend angepaßtes Bohrfutter einer Bearbeitungsmaschine aufgenommen zu werden.

Die zylindrische Außenmantelfläche 5 kann gemäß der Darstellung in Fig. 1 a wendelförmige Bohrmehlnuten 15 aufweisen, zum besseren Abtransport des Bohrkleins, insbesondere bei senkrecht nach unten erfolgenden Bearbeitungsweise. Die Außenmantelfläche 5 kann jedoch auch zylindrisch ohne Bohrmehlnuten, d. h. ohne Förderwendel für das Bohrklein ausgebildet sein, entsprechend der Darstellung in Fig. 2 a, 3 a.

Die Bohrkronen 2 bis 4 können gemäß der Darstellung in Fig. 2 a, 3 a, Durchbrüche 16, 16' aufweisen, die das Bohrklein vom inneren der Bohrkrone nach außen befördern. So sind in Fig. 2 a zwei ovalförmige, übereinander liegende Durchbrüche 16, 16' über die Länge der Bohrkrone angeordnet. Das Ausführungsbeispiel nach Fig. 3 a enthält einen länglichen Durchbruch 16, der sich über einen längeren Abschnitt des Zylinders der Bohrkrone erstreckt. Es können sich mehrere solcher Durchbrüche am Umfang der Bohrkrone befinden.

Erfindungsgemäß befindet sich innerhalb der Bohrkrone ein als Fräsbohrwerkzeug 17 bezeichnetes Werkzeug, welches gemäß den Ausführungsbeispielen nach Fig. 1 a bis 3 a unterschiedlich ausgebildet sein kann. Prinzipiell können diese Fräsbohrwerkzeuge in ihrer Bauart entsprechend handelsüblichen Forstnerbohrer 18 ähnlich der Ausgestaltung nach DIN 7483 ausgebildet sein, wie dies in den Fig. 1 a, 2 a dargestellt ist. Dieser Förstnerbohrer besteht gemäß der Ausführungsform nach Fig. 1 a aus einem Stirnfräser 19 mit stirnseitigen Schneidflächen 20 und zugehörigen axialen Durchbrüchen 21, 21' (siehe Fig. 1 b) zum Abtransport des Bohrkleins. Der Stirnfräser 19 weist nicht nur radiale Schneidflächen 20', sondern zusätzlich auch eine ringförmige Schneidfläche 20'' auf, um einen Materialabtrag zu bewirken. Schließlich sind axiale Schneidflächen 20''' in bekannter Weise vorgesehen.

Der hintere Schaftbereich 22 kann gemäß der Darstellung in Fig. 1 a abgesetzt ausgebildet sein und mündet in einen zylindrischen Einspannschaft 23, der in die Befestigungsbohrung 12 im Bohrkronenboden 11 ggf. längsverschiebbar bzw. längenverstellbar eingesetzt wird und gemäß Ausführungsbeispiel nach Fig. 1 a mittels einer Befestigungsschraube 24 gehalten ist.

Beim Ausführungsbeispiel nach Fig. 2 a ist der hintere Schaftbereich als kegelförmiger Einspannschaft 25 ausgebildet, der in eine entsprechend angepaßte kegelförmige Bohrung 12' kraftschlüssig eingesetzt wird. Mittels einer Querbohrung 26 im Massivteil 13 kann der kegelförmige Einspannschaft 25 axial ausgetrieben werden.

Die Ausführungsform nach Fig. 3 a zeigt als weiteres Ausführungsbeispiel einen Mehrkantschaft 27, der beispielsweise mit einem Preßsitz mit der zugehörigen Befestigungsbohrung 12'' eingebracht ist.

Das Fräsbohrwerkzeug 17 im Ausführungsbeispiel nach Fig. 2 a ist ebenfalls prinzipiell nach Art eines Forstnerbohrers 18 ausgebildet, wie zu Fig. 1 a beschrieben. Jedoch ist zusätzlich zum Ausführungsbeispiel nach Fig. 1 a ein Zentrierbohrer 28 einstückig oder mehrstückig befestigt, der sich über die Stirnseite 10 der Bohrkrone 3 hinaus erstreckt, um ein anzentrieren beim Herstellungsvorgang zu ermöglichen. In diesem Fall können die Schneidelemente 8 dieser Bohrkrone 3 problemlos als Flachschneidzähne 8 ausgebildet sein, da diese Schneidzähne keine Führungseigenschaften aufweisen müssen. Demgegenüber werden die Hartmetall-Schneidelemente 7 nach dem Ausführungsbeispiel nach Fig. 1 a als Spitzzähne 7 ausgebildet, um beim Einstechen der Bohrkrone in das zu bearbeitende Material sofort eine Führung auf einem Einstichkreis zu erhalten. Hierdurch wird ein seitliches Versetzen der Bohrkrone beim Anbohrungsvorgang weitestgehend verhindert. Hat sich die Bohrkrone ringförmig in das Material eingegraben, so spielt dann die Zahnform als Spitzzahn eine untergeordnete Rolle.

Beim Ausführungsbeispiel nach Fig. 3 a wird als Alternative zwischen den Zahnformen nach Fig. 1 a und 2 a ein Schneidelement mit trapezförmigem Querschnitt (Trapezzahn 9) gewählt.

Abweichend vom prinzipiell gleichen Aufbau des Fräsbohrwerkzeugs 17 als eine Art Forstnerbohrer im Ausführungsbeispiel nach Fig. 1 a, 2 a wird im Ausführungsbeispiel nach Fig. 3 a ein Flachfräser 29 verwendet, der gemäß der Darstellung in Fig. 3 a, 3 b als flacher, sich axial erstreckender Fräser ausgebildet ist. Die stirnseitigen Schneidflächen 20 sind als radialförmige Schneiden 30, 30' ausgebildet. Auch mit diesem Werkzeug kann ein flächenförmiger Materialabtrag beim axialer Vorschub des Bohrwerkzeugs 1, 4 erfolgen.

Beim Ausführungsbeispiel nach Fig. 1 a ist die Stirnfläche des Fräsbohrwerkzeugs 17 um die Länge l₂ gegenüber der Stirnseite 10 der Bohrkrone 2 zurückversetzt angeordnet. Dies bedeutet, daß beim Einsatz dieses Bohrwerkzeugs zunächst ein ringförmiger Kanal oder Spalt mit der Länge l₂ in das zu bearbeitende Material hergestellt wird, bevor das Fräsbohrwerkzeug 17, 19 zum Einsatz kommt. Fährt man mit dem axialen Vorschub dieses Bohrwerkzeugs fort, so wird sodann der innere Kern des Materials, der vorzugsweise aus Holz besteht, ebenfalls abgetragen, so daß sich eine entsprechende Bohrung im oberen Bereich des bereits ringförmig hergestellten Ringkanals einstellt, dessen Tiefe je nach axialem Bohrfortschritt ausfällt. Der Durchmesser dieser hergestellten Bohrung entspricht dem Durchmesser d₂ des Fräsbohrwerkzeugs 17, welcher gleich oder annähernd gleich dem Innendurchmesser d₃ des inneren Schneidzahnkreises bzw. des Innendurchmessers d₃ des hergestellten Ringspalts ist. In Sonderfällen kann der Innendurchmesser d₃ des inneren Schneidzahnkreises differieren vom wirksamen Außendurchmesser d₂ des Fräsbohrwerkzeugs 17. Üblicherweise wird der durch die Bohrkrone 2, 4 belassene Kernbereich von dem Fräsbohrwerkzeug 17 über den kompletten Durchmesser abgetragen. Hierdurch entsteht eine Sackbohrung, in die ein topfförmiges Befestigungsmittel eingesetzt werden kann, dessen Wandungsabschnitte in den hergestellten Ringkanal eingelassen werden und dessen topfförmiger Boden als Befestigungsflansch oder Befestigungsanker ggf. mit Befestigungsbohrung oder dergleichen ausgebildet ist. Dabei kann die Eindringtiefe des Fräsbohrwerkzeugs 17 in das zu bearbeitende Material über eine solche axiale Länge erfolgen, welches der Höhe bzw. Stärke des Befestigungsflansches entspricht, so daß dieser bündig oder versenkt im Werkstück angeordnet ist.

Beim Ausführungsbeispiel nach Fig. 2 a ist beispielsweise die Eindringtiefe der Bohrkrone 3 mit l₃ bezeichnet, bevor das zugehörige Fräsbohrwerkzeug 17, 18 ein Abtrag des Innenkerns vornimmt. In diesem Fall kann das einzusetzende Befestigungsmittel eine größere topfförmige Zylinderwandung aufweisen als bei der mit dem Ausführungsbeispiel nach Fig. 1 a hergestellten Bohrloch.

Die entsprechende Eindringtiefe beim Ausführungsbeispiel nach Fig. 3 a ist mit l₄ bezeichnet.

Das innerhalb der jeweiligen Bohrkrone 2 bis 4 oder einer jeweiligen Bohrkrone angeordnete Fräsbohrwerkzeug 17 wird demzufolge in seiner axialen Höhe derart positioniert, daß zum einen ein geforderter bzw. gewünschter Ringspalt zur Aufnahme einer entsprechenden Befestigungshülse mit entsprechender Länge l₂ bis l₄ entsteht, bevor eine Entfernung des Kerns erfolgt, in welchen dann der Befestigungsflansch eines entsprechenden Befestigungsmittels eingesetzt wird.

Die Erfindung ist nicht auf die dargestellten und beschriebenen Ausführungsbeispiele beschränkt. Selbstverständlich können insbesondere Abmessungsverhältnisse und Anordnungen des innerhalb der Bohrkrone angeordneten Fräsbohrwerkzeugs variieren, um entsprechend herzustellende Befestigungs- und Einsatzbohrungen für solche Befestigungsmittel herzustellen. Die topfförmigen Befestigungsmittel stellen demnach spezielle dübelartige Befestigungsmittel dar, die mit dem erfindungsgemäßen Bohrwerkzeug verarbeitet werden können.

### Bezugzeichenliste:

- 1.: Bohrwerkzeug
- 2.: Bohrkrone
- 3.: "
- 4.: "
- 5.: Zylinderaußenmantelfläche
- 6.: Zylinderinnenmantelfläche
- 7.: Hartmetall-Schneidelement
- 8.: "
- 9.: "
- 10.: Stirnseite
- 11.: Bohrkronenboden
- 12.: Befestigungsbohrung
- 13.: Massivteil
- 14.: Aufnahmeschaft
- 15.: Bohrmehlnut
- 16.: Durchbrüche
- 17.: Fräsbohrwerkzeug
- 18.: Förstnerbohrer
- 19.: Stirnfräser
- 20.: Schneidflächen
- 21.: Durchbrüchen
- 22.: Schaftbereich
- 23.: zyl. Einspannschaft
- 24.: Befestigungsschraube
- 25.: kegelförmiger Einspannschaft
- 26.: Querbohrung
- 27.: Mehrkantschaft
- 28.: Zentrierbohrer
- 29.: Flachfräser
- 30.: Radialschneider

## Patentansprüche

1. Bohrwerkzeug, insbesondere zur Holzbearbeitung, mit einer hohlzylindrischen Bohrkrone (2-4), mit stirnseitigen Schneidelementen (7-9) und einem innerhalb der Bohrkrone (2-4) gehaltenen Einsatz dadurch gekennzeichnet, daß der Einsatz als Fräsbohrwerkzeug (17, 18, 29) ausgebildet ist, dessen stirnseitige Schneiden (20) gegenüber der Stirnseite (10) der Bohrkrone (2-4) zurückversetzt sind.

2. Bohrkrone nach Anspruch 1, dadurch gekennzeichnet, daß der Bohrungsdurchmesser (d₂) des Fräsbohrwerkzeugs (17, 18, 29) gleich oder geringfügig kleiner ist als der Innendurchmesser (d₃) des durch die Bohrkrone (2-4) erzeugten Ringspalts.

3. Bohrwerkzeug nach Anspruch 1 oder 2, dadurch gekennzeichnet, daß das Fräsbohrwerkzeug (17, 18, 29) einen materialabtragenden Bohrerdurchmesser (d₂) aufweist, der wenigstens 50% des Innendurchmessers (d₁) der Bohrkrone (2-4) beträgt.

4. Bohrwerkzeug nach einem der Ansprüche 1-3, dadurch gekennzeichnet, daß das Fräsbohrwerkzeug (17, 18, 29) mit seinen stirnseitigen Schneiden (20, 30) um eine variable Länge (l₂-l₄) gegenüber den stirnseitigen Schneidelementen (7-9) der Bohrkrone (2-4) zurückversetzt sind.

5. Bohrwerkzeug nach einem der vorhergehenden Ansprüche, dadurch gekennzeichnet, daß das innerhalb der Bohrkrone (2-4) zurückversetzte Fräsbohrwerkzeug (17) als Forstnerbohrer (18), als Kunstbohrer, als Beschlagbohrer oder dergleichen ausgebildet ist, dessen wirksamer Außendurchmesser (d₂) etwa gleich dem Innendurchmesser (d₁) der Bohrkrone (2-4) entspricht.

6. Bohrwerkzeug nach einem der vorhergehenden Ansprüche, dadurch gekennzeichnet, daß der Einspannschaft (23, 25, 27) des Fräsbohrwerkzeugs (17) zylindrisch (23), kegelförmig (25) oder sechskantförmig (27) ausgebildet ist, der kraftschlüssig und/oder formschlüssig im Bohrkronenboden (11, 13) insbesondere lösbar oder einstückig befestigt bzw. angeordnet ist.

7. Bohrwerkzeug nach einem der vorhergehenden Ansprüche, dadurch gekennzeichnet, daß das Fräsbohrwerkzeug (17) innerhalb der Bohrkrone (2-4) höhenverstellbar angeordnet ist, wobei vorzugsweise der Einspannschaft (23, 25, 27) in seiner Aufnahmebohrung (12) verstellbar und arretierbar ist.

8. Bohrwerkzeug nach einem der vorhergehenden Ansprüche, dadurch gekennzeichnet, daß das Fräsbohrwerkzeug (17) innerhalb der Bohrkrone (2-4) an seiner Stirnseite (20) einen zusätzlichen Zentrierbohrer (28) aufweist, der die Bohrkrone (2-4) stirnseitig als Zentrierspitze überragt.

9. Bohrwerkzeug nach einem der vorhergehenden Ansprüche, dadurch gekennzeichnet, daß die Bohrkrone (2-4) mit darin enthaltenem Fräsbohrwerkzeug (17) an ihrer Außenmantelfläche (5) glatt oder mit einer Förderwendelstruktur (15) ausgebildet ist.

10. Bohrwerkzeug nach einem der vorhergehenden Ansprüche, dadurch gekennzeichnet, daß die Bohrkrone (2-4) mit darin enthaltenem Fräsbohrwerkzeug (17) an ihrer Außenmantelfläche (5) wenigstens eine Durchtrittsöffnung (16) für Bohrklein aufweist.

11. Bohrwerkzeug nach einem der vorhergehenden Ansprüche, dadurch gekennzeichnet, daß die stirnseitigen Schneidelemente (7-9) der Bohrkrone (2-4) als Hartmetall-Schneidzähne ausgebildet sind, die im Querschnitt als Spitzzähne (7), als trapezförmige Zähne (9), als Flachzähne (8) oder dergleichen ausgebildet sind.

## Claims

1. Drilling tool, especially for working wood, having a hollow-cylindrical annular bit (2-4), having forward-face cutting elements (7-9) and an insert mounted inside the annular bit (2-4), characterised in that the insert is in the form of a milling drill tool (17, 18, 29) the forward-face cutters (20) of which are set back relative to the forward face (10) of the annular bit (2-4).

2. Drilling tool according to claim 1, characterised in that the drilling diameter (d₂) of the milling drill tool (17, 18, 29) is equal to or slightly smaller than the internal diameter (d₃) of the annular slot produced by the annular bit (2-4).

3. Drilling tool according to claim 1 or 2, characterised in that the milling drill tool (17, 18, 29) has a material-removing drill diameter (d₂) that is at least 50 % of the internal diameter (d₁) of the annular bit (2-4).

4. Drilling tool according to any one of claims 1 to 3, characterised in that the milling drill tool (17, 18, 29) with its forward-face cutters (20, 30) is set back relative to the forward-face cutting elements (7-9) of the annular bit (2-4) by an adjustable length (I₂-I₄).

5. Drilling tool according to any one of the preceding claims, characterised in that the milling drill tool (17) set back inside the annular bit (2-4) is in the form of a Forstner bit (18), a multi-spur machine bit, a forming cutter bit or the like, the effective external diameter (d₂) of which corresponds approximately to the internal diameter (d₁) of the annular bit (2-4).

6. Drilling tool according to any one of the preceding claims, characterised in that the clamping shank (23, 25, 27) of the milling drill tool (17) is cylindrical (23), cone-shaped (25) or hexagonal (27) and is affixed or arranged by tightness and/or by interlocking in the annular bit base (11,13), especially detachably or integrally.

7. Drilling tool according to any one of the preceding claims, characterised in that the milling drill tool (17) is so arranged inside the annular bit (2-4) that it is height-adjustable, the clamping shank (23, 25, 27) preferably being adjustable and arrestable in its receiving bore (12).

8. Drilling tool according to any one of the preceding claims, characterised in that the milling drill tool (17) inside the annular bit (2-4) has on its forward face (20) an additional centering drill (28) which projects in the form of a centering point beyond the forward face of the annular bit (2-4).

9. Drilling tool according to any one of the preceding claims, characterised in that the outer surface (5) of the annular bit (2-4) with the milling drill tool (17) contained therein is smooth or has a conveyor helix structure (15).

10. Drilling tool according to any one of the preceding claims, characterised in that the outer surface (5) of the annular bit (2-4) with the milling drill tool (17) contained therein has at least one opening (16) for drilling debris.

11. Drilling tool according to any one of the preceding claims, characterised in that the forward-face cutting elements (7-9) of the annular bit (2-4) are in the form of metal carbide cutting teeth which in cross-section are in the form of pointed teeth (7), in the form of trapezoidal teeth (9), in the form of flat teeth (8) or the like.

## Revendications

1. Outil de forage, notamment pour le travail du bois, avec une couronne cylindrique creuse (2-4), avec des éléments coupants frontaux (7-9) et une pièce d'insertion maintenue à l'intérieur de la couronne (2-4), **caractérisé** en ce que la pièce d'insertion est réalisée sous forme d'outil de fraisage (17, 18, 29), dont les tranchants frontaux (20) sont en retrait par rapport au côté frontal (10) de la couronne (2-4).

2. Outil de forage selon la revendication 1, **caractérisé** en ce que le diamètre de forage (d₂) de l'outil de fraisage (17, 18, 29) est égal ou légèrement inférieur au diamètre intérieur (d₃) de la fente annulaire produite par la couronne (2-4).

3. Outil de forage selon la revendication 1 ou 2, **caractérisé** en ce que l'outil de fraisage (17, 18, 29) présente un diamètre (d₂) de forage par enlèvement de matière qui est égal à au moins 50% du diamètre intérieur (d₁) de la couronne (2-4).

4. Outil de forage selon une des revendications 1 à 3, **caractérisé** en ce que les tranchants frontaux (20, 30) de l'outil de fraisage (17, 18, 29) sont en retrait d'une longueur variable (l₂-l₄) par rapport aux éléments coupants frontaux (7-9) de la couronne (2-4).

5. Outil de forage selon une des revendications précédentes, **caractérisé** en ce que l'outil de fraisage (17) placé en retrait à l'intérieur de la couronne (2-4) est réalisé sous forme de foret à pointe de centrage (18), de foret de sculpteur, de foret pour ferrures ou analogue, dont le diamètre extérieur actif (d₂) est approximativement égal au diamètre intérieur (d₁) de la couronne (2-4).

6. Outil de forage selon une des revendications précédentes, **caractérisé** en ce que la tige de serrage (23, 25, 27) de l'outil de fraisage (17) est réalisée de forme cylindrique (23), conique (25) ou hexagonale (27), et elle est fixée ou encore disposée à force et/ou en engagement positif dans le fond (11, 13) de la couronne, notamment de manière amovible ou d'un seul tenant.

7. Outil de forage selon une des revendications précédentes, **caractérisé** en ce que l'outil de fraisage (17) est disposé avec possibilité de réglage en hauteur à l'intérieur de la couronne (2-4), la tige de serrage (23, 25, 27) étant de préférence disposée avec possibilité de réglage et de blocage dans son perçage récepteur (12).

8. Outil de forage selon une des revendications précédentes, **caractérisé** en ce que l'outil de fraisage (17) présente à l'intérieur de la couronne (2-4), sur son côté frontal (20), un foret de centrage supplémentaire (28), qui dépasse du côté frontal de la couronne (2-4) en tant que pointe de centrage.

9. Outil de forage selon une des revendications précédentes, **caractérisé** en ce que la couronne (2-4), avec l'outil de fraisage (17) contenu à l'intérieur, est réalisée, sur sa face d'enveloppe extérieure (5), lisse ou pourvue d'une rainure hélicoïdale d'évacuation (15).

10. Outil de forage selon une des revendications précédentes, **caractérisé** en ce que la couronne (2-4), avec l'outil de fraisage (17) contenu à l'intérieur, présente sur sa face d'enveloppe extérieure (5) au moins une ouverture de passage (16) pour les déblais de forage.

11. Outil de forage selon une des revendications précédentes, **caractérisé** en ce que les éléments coupants frontaux (7-9) de la couronne (2-4) sont réalisés sous forme de dents coupantes en métal dur, qui sont réalisées avec une forme de section de dents pointues (7), de dents trapézoïdales (9), de dents plates (8) ou analogues.
